# EUROPÄISCHE PATENTSCHRIFT

(11) **EP 2 643 829 B1**
(45) Veröffentlichungstag und Bekanntmachung des Hinweises auf die Patenterteilung: **11.12.2019**
(21) Anmeldenummer: 11748677.9
(22) Anmeldetag: 26.08.2011
(51) Int. Cl.: G08G 1/16, B60W 30/09

(54) **VERFAHREN UND ABSTANDSKONTROLLEINRICHTUNG ZUR VERMEIDUNG VON KOLLISIONEN EINES KRAFTFAHRZEUGS IN EINER FAHRSITUATION MIT GERINGEM SEITENABSTAND**
METHOD AND DISTANCE CONTROL DEVICE FOR PREVENTING COLLISIONS OF A MOTOR VEHICLE IN A DRIVING SITUATION WITH LITTLE LATERAL DISTANCE
PROCÉDÉ ET DISPOSITIF DE CONTRÔLE DE DISTANCE POUR ÉVITER L'ENTRÉE EN COLLISION D'UN VÉHICULE AUTOMOBILE DANS UNE SITUATION DE CONDUITE À FAIBLE DISTANCE LATÉRALE

(30) Priorität: 24.11.2010 DE 102010061829
(43) Veröffentlichungstag der Anmeldung: 02.10.2013
(73) Patentinhaber: Continental Teves AG & Co. OHG, 60488 Frankfurt am Main (DE)
(72) Erfinder: STRAUSS, Matthias, 64319 Pfungstadt (DE); BOBEV, Galin, 64287 Darmstadt (DE)
(86) Internationale Anmeldenummer: PCT/EP2011/064717
(87) Internationale Veröffentlichungsnummer: WO 2012/069219

(56) Entgegenhaltungen:
- WO-A2-2007/034387
- DE-A1-102004 054 720
- DE-A1-102005 018 301
- DE-A1-102006 043 149
- DE-A1-102007 058 538

## Beschreibung

Die Erfindung betrifft ein Verfahren gemäß Oberbegriff von Anspruch 1 und eine Abstandskontrolleinrichtung gemäß Oberbegriff von Anspruch 20.

Aus dem Stand der Technik sind bereits Brems- und Lenkassistenten für Kraftfahrzeuge bekannt, die in kritischen Situationen den Fahrer unterstützen oder selbstständig einen Lenk- bzw. Eingriff in das Fahrzeugbremssystem durchführen. So beschreibt die DE 10 2008 019 781 A1 beispielsweise ein Verfahren zur Vermeidung von Kollisionen. Dabei wird zunächst ein Hindernis auf einer Fahrbahn detektiert und anschließend die Information über das Hindernis mittels Fahrzeug-zu-Fahrzeug-Kommunikation an in der Nähe befindliche Fahrzeuge weitergegeben. Fahrzeuge, die die Information über das Hindernis besitzen, geben eine Warnung an den Fahrer aus oder führen selbsttätig ein Brems- oder Ausweichmanöver aus.

Aus der DE 10 2008 048 163 A1 ist ein Fahrzeugsystem zur Kollisionsaufzeichnung und Kollisionsvermeidung bekannt. Dazu verfügt das Fahrzeug über Ultraschallsensoren, die im Front- und/oder Seitenbereich angebracht sind und Hindernisse detektieren, sobald diese in Sensorreichweite gelangen. Wenn eine bevorstehende Kollision festgestellt wird, kann das System automatisierte Lenkvorgänge zum Ausweichen und/oder Bremsvorgänge zum Anhalten vor einem Hindernis durchführen.

DE 10 2007 058 538 A1 betrifft ein Verfahren zum Kontrollieren einer Gefahrensituation im Verkehr, an der eine Anzahl Fahrzeuge beteiligt ist, bei dem für jedes Fahrzeug durch jeweils ein in dem Fahrzeug angeordnetes Modul mindestens eine Alternative für eine Trajektorie zum Ausweichen vor mindestens einem Hindernis ermittelt wird und bei dem die Alternativen für mindestens zwei Fahrzeuge durch die in den Fahrzeugen angeordneten Module untereinander ausgetauscht werden und für jedes Fahrzeug unter gegenseitiger Abstimmung der Alternativen eine Alternative für die Trajektorie ausgewählt wird.

DE 10 2006 043 149 A1 betrifft einen integrierten Quer- und Längsführungsassistenten zur Unterstützung des Fahrers beim Fahrspurwechsel von einer Momentanspur auf eine benachbarte Zielspur.

DE 10 2005 021 845 A1 betrifft ein Fahrzeugbedienungs-Unterstützungssystem zum Unterstützen einer Ausweich- bzw. Vermeidungsbedienung eines Hindernisses ausweichenden Fahrzeugs und einer Rückstellbedienung nach der Vermeidungsbedienung.

DE 10 148 539 A1 betrifft ein Verfahren zum Assistieren eines Fahrers eines Kraftfahrzeugs bzw. ein entsprechendes Fahrerassistenzsystem, das den Fahrer eines Kraftfahrzeugs beim Führen des Kraftfahrzeugs unterstützt bzw. in kritischen Situationen, in denen erkennbar eine Handlung des Fahrers eine eintretende Konfliktsituation, insbesondere eine Kollision, nicht mehr verhindern kann, die Kontrolle über das Fahrzeug übernimmt, um die Situationsfolgen zu minimieren.

DE 10 2005 052 634 A1 betrifft ein Verfahren und eine Vorrichtung zur Fahrerunterstützung vor und/oder bei Durchfahren einer Engstelle.

DE 10 2005 039 167 A1 betrifft eine Fahrassistenzvorrichtung zur Warnung eines Fahrers eines Fahrzeugs vor einem drohenden Abkommen von einer Fahrbahn und/oder einem Verlassen einer Fahrspur, sowie ein Verfahren zum Betrieb einer solchen Fahrassistenzvorrichtung.

DE 10 2007 015 879 A1 betriff ein Verfahren für die Steuerung eines Fahrerassistenzsystems mit Sensoren für die Erfassung des Fahrzeugumfelds und einer Einrichtung für den Eingriff in Bordsysteme des Fahrzeugs. In Abhängigkeit von Ausgangssignalen der Sensoren wird das Fahrzeugumfeld auf Hindernisse überwacht. Bei Erfassen eines Hindernisses wird die Solltrajektorie des Fahrzeugs derart verändert, dass ein gefahrloses Passieren des erfassten Hindernisses ermöglicht wird.

DE 10 2005 018 301 A1 betrifft eine Datenübertragungsvorrichtung für kooperativen Datenaustausch zwischen mobilen Gegenständen, insbesondere einem Fahrzeug, mit mindestens einem Speichermittel für geographische Daten, betreffend die Position des Gegenstandes, Bewegungsdaten des Gegenstandes und/oder die Zustandsdaten des Gegenstandes.

WO 2007 034 387 A2 betrifft ein drahtloses Ad-hoc-Netzwerk und insbesondere eine Fahrzeug-zu-Fahrzeug-Kommunikation, bei denen sensorgestützte Fahrzeuge kooperativ kommunizieren, um z.B. Kollisionen zu vermeiden oder Information auszutauschen.

DE 10 2008 061 30 A1 betrifft die Verwendung einer Zündschlüsselfunktechnik zusätzlich zu WLAN-basierter Kommunikation in einem Fahrzeug, um mit anderen Fahrzeugen zu kommunizieren. Hierbei werden mittels der Zündschlüsselfunktechnik nur ausgewählte Daten gesendet, die sich signifikant verändert haben. Die übrigen Daten werden nicht gesendet oder für die WLAN-Kommunikation aufgespart.

DE 10 2004 054 720 A1 betrifft ein Verfahren zum Betreiben eines Fahrzeugs mit einem Kollisionsvermeidungssystem, umfassend Mittel zur Erfassung potentieller Kollisionspartner und mit einer Steuereinheit verbundene Mittel zur Auswertung einer Kollisionsgefahr.

Alle aus dem Stand der Technik bekannten Systemen sind insofern nachteilbehaftet, da sie mittels eines Eingriffs in das Fahrzeugbremssystem das Fahrzeug stark abbremsen oder sogar zum Stillstand bringen, wodurch ein Auffahrrisiko für den Folgeverkehr geschaffen wird, bzw. mittels eines Eingriffs in das Fahrzeuglenksystem eine so starke Richtungsänderung des Fahrzeugs herbeigeführt wird, dass ein zusätzlicher Eingriff des ESP-Systems zur Fahrzeugstabilisierung notwendig wird.

Die Aufgabe der vorliegenden Erfindung besteht darin, in einer Fahrsituation eines Fahrzeugs mit nur geringem Seitenabstand zu einem Kollisionskörper eine Kollision zu vermeiden, ohne dabei durch den Eingriff eine zusätzliche Gefährdungssituation für andere Verkehrsteilnehmer zu schaffen.

Diese Aufgabe wird erfindungsgemäß durch das Verfahren gemäß Anspruch 1 und die Abstandskontrolleinrichtung gemäß Anspruch 20 gelöst.

Die Erfindung betrifft ein Verfahren zur Vermeidung von Kollisionen eines Fahrzeugs in einer Fahrsituation mit geringem Seitenabstand zu einem Kollisionskörper, wobei Daten von Nahbereichssensoren und/oder Daten eines Fahrzeugkommunikationsmoduls genutzt werden und wobei ein Warnsignal ausgegeben wird und/oder ein Eingriff in das Fahrzeugbremssystem und/oder das Fahrzeuglenksystem durchgeführt wird, wenn ein geschwindigkeitsabhängiger Mindestabstand des Fahrzeugs zu einem Kollisionskörper unterschritten wird oder die vorausberechnete Fahrtrajektorie eines oder mehrerer Fahrzeuge auf eine bevorstehende Kollision schließen lassen. Das erfindungsgemäße Verfahren zeichnet sich dadurch aus, dass der Eingriff in das Fahrzeugbremssystem derart durchgeführt wird, dass sich die Fahrtrichtung des Fahrzeugs kontrolliert verändert. Dadurch kann eine bevorstehende Kollision auf einfache Art und Weise vermieden werden, ohne den Umgebungsverkehr zu beeinflussen. Da der Eingriff in das Fahrzeugbremssystem ausschließlich der Fahrtrichtungsänderung zum Zweck der Kollisionsvermeidung dient, tritt nur eine geringfügige Fahrzeugverzögerung auf. Somit wird für nachfolgende Fahrzeuge keine Auffahrgefährdung geschaffen und eine ohnehin kritische Verkehrsituation nicht durch Erzeugen zusätzlicher Gefahren verschärft. Außerdem führt die Richtungsänderung durch den Eingriff in das Fahrzeugbremssystem zu einer im Wesentlichen moderaten Fahrkurvenradiusbeeinflussung bzw. Fahrkurvenradiuserzeugung. Somit ergibt sich weiterhin der Vorteil, dass eine plötzliche und scharfe Richtungsänderung, wie sie beispielsweise von einer automatisierten Lenkbewegung zum Ausweichen vor einem Hindernis verursacht wird, vermieden werden kann. Eine plötzliche und scharfe Richtungsänderung ist zudem häufig Auslöser für eine Instabilität im Fahrverhalten des Fahrzeugs, was weitere Fahrzeugregeleingriffe, z.B. durch das ESP-System, notwendig macht. Außerdem ist eine plötzliche und scharfe Lenkbewegung stets mit einer Gefährdung des Umgebungsverkehrs verbunden, welcher dadurch ebenfalls zu einer entsprechenden Reaktion zur Unfallvermeidung gezwungen wird. Da das erfindungsgemäße Verfahren die Fahrtrajektorie des eigenen Fahrzeugs und ggf. weiterer Fahrzeuge vorausberechnet, kann die Richtungsänderung mittels des Eingriffs in das Fahrzeugbremssystem bereits derart frühzeitig durchgeführt werden, dass eine plötzliche und scharfe Richtungsänderung nicht notwendig wird sondern auch durch diese im Wesentlichen moderate Richtungsbeeinflussung eine Kollision vermieden werden kann. Ein weiterer Vorteil des erfindungsgemäßen Verfahrens liegt darin, dass bei einer Kurvenfahrt, bei welcher der Fahrer des Fahrzeugs einen bestimmten Lenkwinkel am Lenkrad einstellt um einen entsprechenden Kurvenradius zu fahren, keine Veränderung des Winkelzusammenhangs zwischen gelenkten Rädern und Lenkrad erfolgt. Insbesondere in einer Kurvensituation kann eine unerwartete Veränderung des Winkelzusammenhangs zwischen Lenkrad und gelenkten Rädern zu Verunsicherung und Irritation des Fahrers führen. Indem nach einer bevorzugten Maßnahme die Ausgabe eines Warnsignals und oder ein Eingriff in das Fahrzeugbrems- bzw. das Fahrzeuglenksystem von einem geschwindigkeistabhängigen Mindestabstand abhängig gemacht wird, kann die Ausgabe unnötiger und somit vom Fahrer als störend empfundener Warnungen bzw. Eingriffe vermieden werden. Es wird davon ausgegangen, dass der Fahrer eines sich langsam fortbewegenden Fahrzeugs eine genauere und Kontrolle und einen besseren Überblick über sein Fahrzeug und die das Fahrzeug umgebenden Abstandszonen hat als der Fahrer eines sich schnell fortbewegenden Fahrzeugs. Insbesondere beim Einparken des Fahrzeugs in eine enge Parklücke kann es beispielsweise zu Situationen kommen, in denen ein unter normalen Umständen notwendiger Sicherheitsabstand deutlich unterschritten wird.

Bevorzugt ist es vorgesehen, dass bei einem Eingriff in das Fahrzeugbremssystem zur Änderung der Fahrtrichtung die linken oder rechten Räder paarweise gebremst werden. Ein derartiger Eingriff in das Fahrzeugbremssystem ist zur Fahrtrichtungsbeeinflussung besonders geeignet, da er die eine Fahrzeugseite gegenüber der anderen Fahrzeugseite stärkstmöglich verzögern kann. Somit kann durch paarweises Bremsen der Räder einer Fahrzeugseite die größtmögliche Kurvenradiusbeeinflussung erzeugt werden. Auch ein unterschiedlich starkes Abbremsen der Räder einer Fahrzeugseite ist möglich.

In einer weiteren bevorzugten Ausführungsform ist es vorgesehen, dass bei einem Eingriff in das Fahrzeugbremssystem zur Änderung der Fahrtrichtung ein einzelnes Rad gebremst wird. Ein Eingriff in das Fahrzeugbremssystem an einem einzelnen Fahrzeugrad bietet den Vorteil, dass je nach Fahrzeugart und vorliegender Fahrsituation der Eingriff weitestgehend flexibel und im Wesentlichen optimal an die jeweiligen Erfordernisse angepasst werden kann. So kann es unter Umständen in einer Kurvensituation im Hinblick auf die Fahrzeugstabilität von Vorteil sein, beispielsweise nur ein einzelnes Vorderrad zu bremsen. Auch während eines Regelvorgangs eines Fahrerassistenzsystems kann ein Eingriff in das Fahrzeugbremssystem an nur einem einzelnen Rad sinnvoll sein. Ebenso ist es möglich, dass bei einer geringfügigen notwendigen Kurvenradiusbeeinflussung nur ein einzelnes Fahrzeugrad gebremst wird.

Zweckmäßigerweise ist es vorgesehen, dass der Eingriff in das Fahrzeugbremssystem zur Änderung der Fahrtrichtung einem ABS-Regelvorgang überlagert wird. Während eines ABS-Regelvorgangs befindet sich das Fahrzeug in der Regel in einem Zustand, welcher hinsichtlich der Fahrstabilität kritisch ist. Dieser Zustand wird auch vom Fahrer wahrgenommen. Befindet sich das Fahrzeug gleichzeitig noch in einer Situation mit geringem Seitenabstand zu einem Kollisionskörper, z.B. in einer engen Kurve, so ergibt sich für den Fahrer des Fahrzeugs eine in hohem Maße stressbeladene Situation, welche ihn oftmals überfordert. Durch die erfindungsgemäße Überlagerung eines ABS-Regelvorgangs mit einem Eingriff in das Fahrzeugbremssystem zur Änderung der Fahrtrichtung ergibt sich der Vorteil, dass nicht nur das Fahrzeug stabilisiert wird, sondern zusätzlich, insbesondere in einer Kurve, eine Kollision mit einem Kollisionskörper vermieden werden kann. Zusätzlich oder alternativ ist während eines ABS-Regelvorgangs auch ein Eingriff in das Fahrzeuglenksystem möglich.

In einer weiteren vorteilhaften Ausführungsform der Erfindung ist es vorgesehen, dass der Eingriff in das Fahrzeugbremssystem zur Änderung der Fahrtrichtung einem ESP-Regelvorgang überlagert wird. Ein im Fahrzeug vorhandenes ESP-System ermöglicht es, mittels gezielter Eingriffe an den einzelnen Radbremsen, das Fahrzeug in einer stabilitätskritischen Situation sicher in der vom Fahrer vorgegebenen Fahrspur zu halten. Durch die Überlagerung des erfindungsgemäßen Eingriffs in das Fahrzeugbremssystem zur Änderung der Fahrtrichtung kann darüber hinaus zusätzlich die vom Fahrer vorgegebene Fahrspur korrigiert werden, um eine Kollision zu vermeiden. Zusätzlich oder alternativ ist während eines ESP-Regelvorgangs auch ein Eingriff in das Fahrzeuglenksystem möglich.

In einer weiteren bevorzugten Ausführungsform ist es vorgesehen, dass der zusätzlich oder alternativ zum Eingriff in das Fahrzeugbremssystem durchgeführte Eingriff in das Fahrzeuglenksystem auf einen vorgegebenen, maximalen Lenkänderungswinkel begrenzt ist. Eine Beeinflussung des Lenkwinkels stellt neben einer gezielten, einzelnen oder paarweisen Abbremsung von Fahrzeugrädern eine effektive Methode zu Fahrtrichtungsänderung eines Fahrzeugs dar. Um die Richtungsänderung jedoch nicht abrupt und für den Fahrer überraschend und damit verunsichernd zu gestalten, wird vorteilhaft ein maximal zulässiger Lenkänderungswinkel vorgegeben. Der maximal zulässige Lenkänderungswinkel ist so ausgelegt, dass in der Regel eine Kollision mit vorhandenen Kollisionskörpern verhindert werden kann, sobald diese von den im Fahrzeug vorhandenen, seitlichen Nahbereichssensoren oder über das Fahrzeugkommunikationsmodul erfasst werden. Trotzdem wird durch die Begrenzung der Lenkwinkeländerung eine heftige und auf den Fahrer verunsichernd wirkende Steuerbewegung vermieden. Aber auch ein kombinierter Eingriff in das Fahrzeugbrems- und das Fahrzeuglenksystem ist möglich. Hierdurch werden die Vorteile beider Eingriffsarten miteinander verbunden.

Zweckmäßigerweise ist es vorgesehen, dass der Eingriff in das Fahrzeuglenksystem eine Empfehlung zur Änderung des aktuellen Kurvenradius an den Fahrer ist, indem dem Fahrzeuglenkrad ein zusätzliches Kraftmoment überlagert wird. Somit behält der Fahrer die alleinige Kontrolle über den eingestellten Lenkwinkel und fühlt sich nicht bevormundet. Außerdem ergibt sich der Vorteil, dass durch die Empfehlung zur Änderung des Lenkwinkels auch eine Lenkwinkeländerung durchführbar ist, die größer als die Änderungsbegrenzung der autonomen Lenkwinkeländerung ist, ohne den Fahrer dadurch zu verunsichern oder zu bevormunden. Da die Anpassung des Lenkwinkels vom Fahrer selbst vorgenommen wird, empfindet er sich jederzeit als im Besitz der vollen Fahrzeugkontrolle und wird somit durch eine selbst ausgeführte, ggf. auch abrupte Lenkbewegung nicht verunsichert. Zusätzlich zu der Empfehlung zur Änderung des aktuellen Kurvenradius mittels des Lenkrads ist ein autonomer Eingriff in das Fahrzeugbremssystem zur Anpassung der Fahrtrichtung möglich. Außerdem ist es vorteilhaft, dass die Warnung akustisch und/oder optisch und/oder haptisch ist. Durch die Ausgabe einer Warnung an den Fahrer kann dieser auf eine bevorstehende Kollision aufmerksam gemacht werden und ggf. selbst korrigierend in die Fahrzeugführung eingreifen. Somit kann ein Eingriff in das Fahrzeugbrems- und/oder Fahrzeuglenksystem vermieden werden und der Fahrer behält stets die alleinige Fahrzeugkontrolle. Akustische, optische und haptische Warnungen verfügen jeweils über charakteristische Vorzüge, die einzeln oder in Kombination genutzt werden können. Während eine optische Anzeige, beispielsweise im Armaturenbrett, vergleichsweise unauffällig ist und damit auf den Fahrer unaufdringlich wirkt, kann eine akustische Warnung in der Regel eindringlicher auf den Fahrer einwirken. Darüber hinaus erlauben optische und akustische Warnsignale eine Abstufung der Warnintensität, z.B. über den Farbton, die Tonhöhe des akustischen Signals oder die Ausgabeintensität. Haptische Warnungen hingegen werden vom Fahrer in der Regel am deutlichsten wahrgenommen, erlauben aber im Allgemeinen keine derart vielfältigen Abstufungen wie optische oder akustische Warnsignale. Insbesondere durch Kombinationen unterschiedlicher Warnungsausgabearten mit ggf. jeweils unterschiedlichen Intensitäten kann der Fahrer flexibel und weitestgehend optimal angepasst vor einer jeweils vorliegenden Gefahrensituation gewarnt werden.

Weiterhin ist es bevorzugt, dass die Fahrbahnbreite in einer zu durchfahrenden Kurve oder Engstelle vor dem Durchfahren der Kurve oder Engstelle mittels Umfeldsensorik und/oder Kartendaten und/oder des Fahrzeugkommunikationsmoduls erfasst wird. Somit wird es überhaupt erst ermöglicht, eine Engstelle bzw. Kurve in Abhängigkeit der bestimmten Fahrbahnbreite hinsichtlich der zu erwartenden Kollisionsgefahr zu bewerten und auf Basis dieser Bewertung ggf. eine Warnung an den Fahrer auszugeben. Eine Fahrbahnbreitenbestimmung mittels im Fahrzeug vorhandener Kartendaten bietet den Vorteil, dass in der Regel bereits weit vor der zu durchfahrenden Engstelle bzw. Kurve die Fahrbahnbreite aus dem Kartenmaterial ausgelesen werden kann. Somit steht eine im Wesentlichen ausreichend lange Zeitdauer für eine Warnung an den Fahrer und eine anschließende Reaktion des Fahrers zur Verfügung. Zudem ist eine Fahrbahnbreitenbestimmung mittels Kartendaten unabhängig von evtl. vorhandenen Sensoranordnungen oder von evtl. mittels des Fahrzeugkommunikationsmoduls empfangenen Botschaften. Der Nachteil einer Fahrbahnbreitenbestimmung auf Basis des Kartenmaterials besteht hingegen darin, dass abhängig von der Aktualität des Kartenmaterials nicht alle Gegebenheiten, beispielsweise neu eingerichtete Baustellen, zwingend bekannt sind. Eine Bestimmung der Fahrbahnbreite durch die im Fahrzeug vorhandenen Sensoren bietet den Vorteil, dass die tatsächliche Fahrbahnbreite zuverlässig erfasst wird. Nachteilig ist hierbei, dass die Fahrbahnbreite erst dann bestimmt werden kann, wenn das Fahrzeug in Sensorreichweite ist. Dementsprechend ist die zur Verfügung stehende Warnzeit begrenzt. Wird die Fahrbahnbreite durch eine mittels des Fahrzeugkommunikationsmoduls empfangene Botschaft erfasst, so steht in der Regel nicht nur eine vergleichsweise große Zeitspanne zur Ausgabe einer Warnung zur Verfügung, sondern es kann auch davon ausgegangen werden, dass die erfasste Fahrbahnbreite der aktuellen Fahrbahnbreite entspricht. Eine besonders große Zuverlässigkeit der Fahrbahnbreitenbestimmung kann durch eine kombinierte Erfassung mittels mehrerer der beschriebenen Verfahren erzielt werden, da so die aufgeführten Nachteile einzelner Verfahren durch die Vorteile anderer Verfahren ausgeglichen werden können.
In einer weiteren bevorzugten Ausführungsform der Erfindung ist es vorgesehen, dass die zur Fahrbahnbreitenbestimmung verwendete Umfeldsensorik ein kameragestütztes Spurerkennungssystem ist. Derartige Systeme sind in vielen Fahrzeugen bereits teil der Serienausstattung und bieten somit den Vorteil einer im Wesentlichen kostenneutralen Implementierung des erfindungsgemäßen Verfahrensschritts zur Fahrbahnbreitenerkennung.

Weiterhin ist es vorteilhaft, dass an den Fahrer eines ersten Fahrzeugs eine Warnung ausgegeben wird, wenn sich ein zweites, entgegenkommendes oder überholendes Fahrzeug mit überhöhter Geschwindigkeit einer vom ersten Fahrzeug zeitgleich mit dem zweiten Fahrzeug zu durchfahrenden Kurve oder Engstelle nähert. Somit wird der Fahrer des ersten Fahrzeugs bereits gewarnt, bevor eine tatsächliche Kollisionsgefahr eintritt. Der Fahrer erhält vor dem betreffenden Streckenabschnitt die Warnung, dass es beim Durchfahren einer Kurve oder Engstelle aufgrund des Fahrverhaltens eines weiteren Fahrzeugs zu einer erhöhten Kollisionsgefahr kommen kann. Daraus ergibt sich der Vorteil, dass der Fahrer sein eigenes Fahrverhalten an die erhöhte Gefahr anpassen kann, um die zu durchfahrende Engstelle bzw. Kurve mit erhöhter Aufmerksamkeit zu passieren. Dies ermöglicht nicht nur die Vermeidung von Kollisionen, sondern bereits die Vermeidung oder zumindest Entschärfung von Situationen, die eine Kollisionsgefahr beinhalten.

Nach einer weiteren bevorzugten Ausführungsform der Erfindung ist es vorgesehen, dass nur dann eine Warnung ausgegeben wird, wenn bei der aktuellen Fahrzeuggeschwindigkeit in der Kurve eine Querbeschleunigung zu erwarten ist, die 0,3 g übersteigt. Solange die durch die Kurvenfahrt bedingte Querbeschleunigung geringer als 0,3 g ist, kann davon ausgegangen werden, dass der Fahrer das Fahrzeug in der Regel ohne Probleme unter Kontrolle hält. Eine sich in den meisten Fällen als unnötig herausstellende Warnung kann dadurch vermieden werden. Dies führt auf der einen Seite zu weniger Verunsicherung beim Fahrer, da keine unnötigen Warnungen ausgegeben werden. Auf der anderen Seite führt dies zu mehr Vertrauen in das System, da der Fahrer schnell erkennt, dass auf eine Warnung in der Regel stets eine Situation folgt, welche eine tatsächliche Kollisionsgefahr birgt. Sollte trotz einer zu erwartenden Querbeschleunigung von weniger als 0,3 g eine Kollisionsgefahr auftreten, so kann das System jederzeit mittels eines autonomen Eingriffs in das Fahrzeugbrems- und/oder Fahrzeuglenksystem eine Anpassung der Fahrtrajektorie vornehmen. Auch eine spätere Warnung bei Erkennen einer Kollisionsgefahr ist möglich.

Außerdem ist es vorteilhaft, dass nur dann eine Warnung ausgegeben wird, wenn die Fahrbahnbreite einen geschwindigkeitsabhängigen Mindestwert unterschreitet. Mit zunehmender Fahrzeuggeschwindigkeit wird es für den Fahrer des Fahrzeugs schwieriger, das Fahrzeug in einer durch äußere Gegebenheiten, wie Fahrbahnbegrenzung oder Fahrbahnmarkierung, vorgegebenen Fahrspur zu halten. Ist die Fahrzeuggeschwindigkeit hingegen im Wesentlichen angepasst an die Fahrbahnbreite, so besteht eine nur geringfügige Kollisionsgefahr. In diesem Fall wird keine Warnung an den Fahrer ausgegeben, da davon ausgegangen wird, dass es aufgrund des situationsgerechten Fahrverhaltens nicht zu einer Kollision kommen wird. Sollte dennoch eine Kollisionsgefahr auftreten, so führt das System einen autonomen Bremsen- und/oder Eingriff in das Fahrzeuglenksystem zur Fahrtrichtungsänderung und Kollisionsvermeidung durch. Außerdem ist auch in diesem Fall eine Warnung bei Erkennen einer Kollisionsgefahr möglich.

Weiterhin ist es vorteilhaft, dass mittels des Fahrzeugkommunikationsmoduls mindestens einer der folgenden, von der eigenen Fahrzeugsensorik gemessenen Parameter an mindestens ein Fahrzeugkommunikationsmodul mindestens eines anderen Fahrzeugs übertragen wird:
- Fahrzeuggeschwindigkeit,
- Fahrzeugbeschleunigung,
- Lenkradwinkel,
- Lenkradwinkelgeschwindigkeit,
- Gierrate,
- Gierbeschleunigung,
- Querbeschleunigung,
- Fahrzeugposition,
- Raddrehzahlen,
- Fahrtrichtung und
- Fahrbahnbreite.
Somit ergibt sich zum einen der Vorteil, dass andere Fahrzeuge bereits frühzeitig eine Information über das sendende Fahrzeug erhalten und eine eventuell vom sendenden Fahrzeug ausgehende Gefährdung erkennen können. Falls beispielsweise auf einer engen und kurvigen Straße dem eigenen Fahrzeug ein anderes Fahrzeug mit überhöhter Geschwindigkeit entgegenkommt, so kann dies z.B. mittels der Informationen "Fahrtrichtung", "Fahrzeugposition", "Fahrzeuggeschwindigkeit" und "Fahrbahnbreite" dem eigenen Fahrzeug mitgeteilt werden. Entsprechend ist es möglich, eine Warnung an den Fahrer auszugeben. Zum anderen ergibt sich der Vorteil, dass beim gemeinsamen Durchfahren zweier Fahrzeuge einer Engstelle ein Eingriff in die Lenkung oder die Bremse des eigenen Fahrzeugs durchgeführt werden kann, bevor die eigenen Sensoren das Bevorstehen einer Kollision erkennen. Der Eingriff wird in diesem Fall aufgrund der übertragenen Informationen über das weitere Fahrzeug durchgeführt. Aber auch eine Übertragung der Fahrbahnbreite an einem bestimmten Streckenabschnitt kann Auslöser einer Warnung im empfangenden Fahrzeug sein. In diesem Fall werden die Informationen "Fahrzeugposition" und "Fahrbahnbreite" benötigt. Sofern ein anschließender Vergleich der empfangenen Positionsdaten mit den eigenen Routendaten, z.B. im Fahrzeugnavigationssystem, ergibt, dass das eigene Fahrzeug zu einem bestimmten Zeitpunkt eine unvorhergesehene Engstelle durchfahren wird, kann eine Warnung ausgegeben werden.

In einer weiteren bevorzugten Ausführungsform der Erfindung ist es vorgesehen, dass die Fahrtrajektorie des eigenen Fahrzeugs über mindestens zwei der folgenden Fahrparameter vorausberechnet wird:
- Fahrzeuggeschwindigkeit,
- Fahrzeugbeschleunigung,
- Lenkradwinkel,
- Lenkradwinkelgeschwindigkeit,
- Gierrate,
- Gierbeschleunigung,
- Querbeschleunigung,
- Fahrzeugposition,
- Raddrehzahlen und
- Fahrtrichtung.
Die Bestimmung der Fahrtrajektorie bietet eine effektive Möglichkeit zur Kollisionsgefährdungserkennung bzw. zur Vorhersage einer unter Umständen bevorstehenden Kollision. Je mehr der oben aufgeführten Fahrparameter zur Verfügung stehen und in die Berechnung eingehen, desto genauer kann die Fahrtrajektorie und somit auch das Kollisionsrisiko bestimmt werden. Die Fahrtrajektorie kann somit dahingehend ausgewertet werden, ob eine Kollision mit einem stationären Hindernis (z.B. Baustellenbegrenzung auf der Autobahn oder Fahrbahnbegrenzung in einer engen Kurve) bevorsteht.

Weiterhin ist es bevorzugt, dass die Fahrtrajektorie eines weiteren Fahrzeugs mittels der von den Umfeldsensoren gemessenen Parameter und/oder mittels der über das Kommunikationsmodul empfangenen Parameter vorausberechnet wird. Daraus ergibt sich der Vorteil, dass auch anhand der mittels des Fahrzeugkommunikationsmoduls empfangenen Parameter eines anderen Fahrzeugs dessen Fahrtrajektorie bestimmt werden und mit der eigenen Fahrtrajektorie verglichen werden kann. Somit ist auch eine effektive Erkennung einer Kollisionsgefahr mit einem nicht-stationären Kollisionskörper möglich. Soweit das andere Fahrzeug über kein geeignetes Fahrzeugkommunikationsmodul verfügt, kann die Fahrtrajektorie des anderen Fahrzeugs auch auf Basis der von den eigenen Umfeldsensoren erfassten Informationen bestimmt werden. Dies erlaubt eine im Wesentlichen autarke Bestimmung der Kollisionsgefährdung. Ebenso ist es möglich, die Fahrtrajektorie eines anderen Fahrzeugs sowohl über die von den Umfeldsensoren erfassten Parameter als auch über die vom Fahrzeugkommunikationsmodul erfassten Parameter zu bestimmen. Durch die damit erzeugte Redundanz kann die Fahrtrajektorie des anderen Fahrzeugs besonders zuverlässig ermittelt werden. Aber auch eine nur teilweise Erfassung der Parameter des anderen Fahrzeugs mittels der Umfeldsensoren und eine nur teilweise Erfassung mittels des Fahrzeugkommunikationsmoduls ist möglich. Somit können Parameter ergänzt werden, die mittels des einen Erfassungsverfahrens nicht erfasst werden können. Werden einzelne Parameter mittels beider Verfahren erfasst, so liegen zumindest diese redundant vor und können zur Erhöhung der Zuverlässigkeit miteinander verglichen werden.

In einer vorteilhaften Ausführungsform der Erfindung ist es vorgesehen, dass eine dynamische Kurvenfahrt eines Fahrzeugs auf einer mehrspurigen Straße eine Fahrsituation mit geringem Seitenabstand darstellt. Ebenso wie auf einem engen Fahrbahnabschnitt kann es beispielsweise auf einer mehrspurigen Straße zu Situationen mit geringem Seitenabstand zu anderen Fahrzeugen kommen. Das Auftreten geringer Seitenabstände wird durch einen kurvenreichen Streckenverlauf und zusätzlich hohe Fahrzeuggeschwindigkeiten stark begünstigt. In diesem Fall geht das Kollisionsrisiko vornehmlich von anderen Fahrzeugen aus. Durch das Einordnen von dynamischen Kurvenfahrten auf einer mehrspurigen Straße als Fahrsituation mit geringem Seitenabstand ergibt sich damit der Vorteil, dass auch in diesen häufig auftretenden und oftmals kritischen Situationen eine Kollision mittels des erfindungsgemäßen Verfahrens vermieden werden kann.

In einer weiteren bevorzugten Ausführungsform ist es vorgesehen, dass das Durchqueren eines Baustellenbereichs eine Fahrsituation mit geringem Seitenabstand darstellt. Obwohl Baustellenbereiche in der Regel keine steilen Kurven aufweisen und nur mit reduzierter Geschwindigkeit durchfahren werden dürfen, kommt es beispielsweise bei Überholmanövern im Baustellenbereich häufig zu Fahrsituationen, in welchen der seitliche Abstand zur Baustellenbegrenzung auf der einen Seite und zum überholten oder überholenden Fahrzeug auf der anderen Seite in einen kritischen Bereich gelangt. Um in diesen Situationen seitliche Kollisionen zu vermeiden, findet das erfindungsgemäße Verfahren auch in Baustellenbereichen Anwendung. Indem nur eine geringfügige Fahrtrichtungsänderung z.B. über die Bremsen durchgeführt wird, ergibt sich hier der weitere Vorteil, dass der Fahrtrichtungsänderungseingriff weitestgehend optimal an die beengten Fahrspuren in Baustellen angepasst ist.

Die Erfindung betrifft weiterhin eine Abstandskontrolleinrichtung, welche im Front- und/oder Seitenbereich des Fahrzeugs angeordnete Nahbereichssensoren und ein Fahrzeugkommunikationsmodul zum Senden und Empfangen von Fahrparametern und/oder von einer Fahrzeugsensorik gemessenen Parametern an/von andere/n Fahrzeugskommunikationsmodule/n umfasst, wobei die Einrichtung ein Warnsignal ausgibt und/oder einen Eingriff in das Fahrzeugbremssystem und/oder das Fahrzeuglenksystem durchführt, wenn ein geschwindigkeitsabhängiger Mindestabstand des Fahrzeugs zu einem Kollisionskörper unterschritten wird . Die Abstandskontrolleinrichtung zeichnet sich dadurch aus, dass die Einrichtung den Eingriff in das Fahrzeugbremssystem derart durchführt, dass sich die Fahrtrichtung des Fahrzeugs verändert. Somit bietet die erfindungsgemäße Abstandskontrolleinrichtung alle notwendigen Vorrichtungen und Module zur Durchführung des erfindungsgemäßen Verfahrens und führt damit auch zu allen daraus resultierenden Vorteilen.

Bevorzugt ist es vorgesehen, dass die Nahbereichssensoren Nahbereichsradarsensoren und/oder Ultraschallsensoren sind. Durch die Verwendung von Sensoren wie Nahbereichsradar und/oder Ultraschall im Front- und/oder Seitenbereich des Fahrzeugs ergibt sich der Vorteil, dass hier oftmals auf bereits vorhandene Sensoren, z.B. von einer Einparkhilfe, zurückgegriffen werden kann. Dadurch können sowohl der zusätzliche Einbauaufwand als auch die zusätzlichen Kosten gering gehalten werden. Zudem sind derartige Sensoren hinsichtlich ihrer Sensorreichweite in der Regel ausreichend, um die Anforderungen der erfindungsgemäßen Abstandskontrolleinrichtung zuverlässig zu erfüllen. Alternativ oder zusätzlich ist es aber auch möglich, eigens für die Detektion von Kollisionskörpern während der Fahrt optimierte Sensoren mit ggf. größerer Sensorreichweite in das Fahrzeug zu integrieren, oder auch auf standardmäßig vorhandene Umfeldsensoren mit vergleichsweise größerer Reichweite, wie z.B. Lidar-, Radar- oder Lasersensoren zurückgreifen.

Gemäß der Erfindung ist es vorgesehen, dass das Fahrzeugkommunikationsmodul auf Basis mindestens einer der folgenden Verbindungen mit mindestens einem anderen Fahrzeugkommunikationsmodul seine Positionsdaten, seine aktuelle Geschwindigkeit, seine Beschleunigung und seine Fahrtrichtung kommuniziert:
- WLAN-Verbindung,
- ISM-Verbindung (Industrial, Scientific, Medical Band),
- Infrarotverbindung und
- Mobilfunkverbindung.
Diese Verbindungsarten bieten dabei unterschiedliche Vor- und Nachteile, je nach Art und Wellenlänge. WLAN-Verbindungen ermöglichen z.B. eine hohe Datenübertragungsrate. Eine Datenübertragung um ein Hindernis herum ist jedoch nur begrenzt möglich. ISM-Verbindungen hingegen bieten zwar eine geringere Datenübertragungsrate, erlauben es aber, auch Daten um ein Sichthindernis herum auszutauschen. Ein ISM-Band stellt außerdem einen öffentlichen Frequenzbereich dar, wodurch sich der weitere Vorteil ergibt, dass keine spezielle Zulassung für Geräte notwendig ist, die in diesem Band senden bzw. empfangen. Infrarotverbindungen wiederum bieten eine geringe Datenübertragungsrate, die bei fehlender Sichtverbindung zudem stark eingeschränkt wird. Mobilfunkverbindungen schließlich werden durch Sichthindernisse nicht beeinträchtigt und bieten eine gute Datenübertragungsrate. Dafür ist der Verbindungsaufbau vergleichsweise langsam. Durch die Kombination und gleichzeitige bzw. parallele Nutzung mehrerer dieser Verbindungsarten ergeben sich weitere Vorteile, da so die Nachteile einzelner Verbindungsarten ausgeglichen werden können.

Weiterhin ist es vorteilhaft, dass die Einrichtung zusätzlich ein sattelitengestütztes Positionsbestimmungsmodul umfasst. Daraus ergibt sich der Vorteil, dass stets aktuelle Fahrzeugpositionsdaten, beispielsweise in Form von GPS-Koordinaten, vorliegen. In Verbindung mit den von der Umfeldsensorik gemessenen Parametern und den Fahrparametern ergibt sich somit der Vorteil, dass alle notwendigen Daten vorhanden sind, um andere Fahrzeuge mittels des Fahrzeugkommunikationsmoduls z.B. vor erkannten Fahrbahnverengungen an einem bestimmten Fahrbahnabschnitt zu warnen. Auch durch die Übermittlung von Daten wie der eigenen Fahrzeuggeschwindigkeit, den GPS-Koordinaten und der daraus abgeleiteten Fahrtrichtung kann in einem anderen Fahrzeug eine Warnung ausgegeben bzw. ein Eingriff durchgeführt werden. Eine Warnung kann beispielsweise dann ausgegeben werden, wenn sich ergibt, dass beide Fahrzeuge gleichzeitig die selbe Engstelle durchfahren werden und somit in Abhängigkeit von den jeweiligen Fahrzeuggeschwindigkeiten ein erhöhtes Kollisionsrisiko besteht. Die GPS-Koordinaten können allerdings auch als Basis für einen Eingriff in die Fahrzeuglenkung oder die Fahrzeugbremsen genutzt werden, z.B. wenn die Fahrzeuge die selbe Engstelle durchfahren, sich dabei aber noch außerhalb der gegenseitigen Sensorreichweite befinden. Mittels des Fahrzeugkommunikationsmoduls können so auch noch kurz vor einer bevorstehenden Kollision die für eine Warnung bzw. einen Eingriff notwendigen Daten erfasst bzw. ausgetauscht werden.

Bevorzugt ist es vorgesehen, dass die Einrichtung zusätzlich ein Navigationssystem mit digitalem Kartenmaterial umfasst. Somit wird es ermöglicht, unabhängig von im Fahrzeug vorhandenen Umfeldsensoren und unabhängig von mittels des Fahrzeugkommunikationsmoduls empfangenen Informationen eine Warnung auszugeben, falls das Fahrzeug auf eine Fahrbahnengstelle zusteuert, für welche die aktuelle Fahrzeuggeschwindigkeit zu hoch ist. Selbst wenn im Fahrzeug geeignete Umfeldsensoren vorhanden sind, so ist deren Sensorreichweite üblicherweise begrenzt. Auch ein anderes Fahrzeug ist häufig nicht in Sendereichweite oder verfügt nicht über die benötigten Informationen über den weiteren Streckenverlauf des eigenen Fahrzeugs. Durch die Verwendung digitalen Kartenmaterials kann ggf. bereits entsprechend frühzeitig und zuverlässig eine Warnung an den Fahrer ausgegeben werden. Da ein Großteil der aktuell am Straßenverkehr teilnehmenden Fahrzeuge über Navigationssysteme verfügt, welche wiederum mit digitalem Kartenmaterial ausgestattet sind, muss kein zusätzlicher Aufwand für die Implementierung einer digitalen Karte aufgebracht werden. Das ohnehin vorhandene Kartenmaterial wird einer zusätzlichen Verwendung zugeführt, wodurch ein Nutzmehrwert entsteht, ohne zusätzliche Kosten zu verursachen.

Weitere bevorzugte Ausführungsformen ergeben sich aus den Unteransprüchen und der nachfolgenden Beschreibung von Ausführungsbeispielen anhand von Figuren.

Es zeigt
- Fig. 1: schematisch eine mögliche Konfiguration der erfindungsgemäßen Abstandskontrolleinrichtung,
- Fig. 2: eine Fahrsituation in einer uneinsehbaren und engen Kurve mit Gegenverkehr, in der das erfindungsgemäße Verfahren zum Einsatz kommt,
- Fig. 3: eine Fahrsituation in einer Baustelle, in der das erfindungsgemäße Verfahren zum Einsatz kommt und
- Fig. 4: einen Abbiegevorgang zweier Fahrzeuge auf einer Kreuzung, bei dem ebenfalls das erfindungsgemäße Verfahren zum Einsatz kommt.

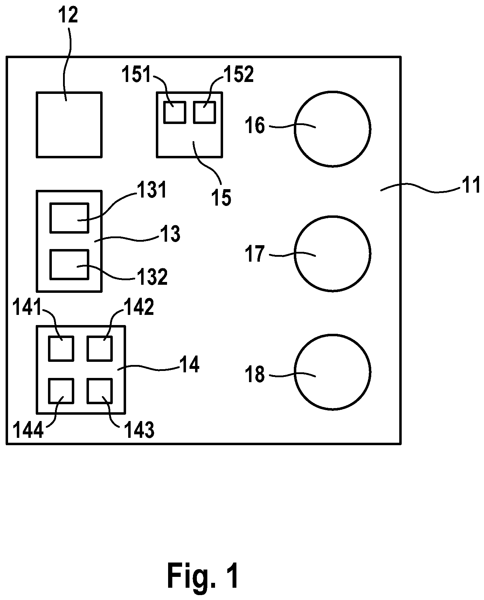

Fig. 1 zeigt schematisch ein beispielhafte Ausführungsform der erfindungsgemäßen Abstandskontrolleinrichtung 11. Abstandskontrolleinrichtung 11 umfasst Speicher 12, auf welchem digitales Kartenmaterial abgelegt ist, Nahbereichssensoren 13, Fahrzeugkommunikationsmodul 14 und Umfeldsensoren 15. Die Nahbereichssensoren 13 umfassen wiederum Nahbereichsradarsensoren 131 und Ultraschallsensoren 132. Beide Sensorgattungen sind sowohl im Front- als auch im Seitenbereich des mit der Abstandskontrolleinrichtung ausgerüsteten Fahrzeugs (nicht dargestellt) angeordnet. Das Fahrzeugkommunikationsmodul 14 verfügt über unterschiedliche, zur Fahrzeug-zu-Fahrzeug- und zur Fahrzeug-zu-Infrastruktur-Kommunikation geeignete Kommunikationsmittel: WLAN-Verbindungsmittel 141, ISM-Verbindungsmittel 142, Infrarot-Verbindungsmittel 143 und Mobilfunkverbindungsmittel 144. Außerdem umfasst die beispielhaft dargestellte Abstandskontrolleinrichtung Umfeldsensoren 15, welche sich in diesem Ausführungsbeispiel aus Stereokameramodul 151 und Lidarsensor 152 zusammensetzen. Über die Warnmittel 16 kann eine optische, akustische und/oder haptische Warnung an den Fahrer ausgegeben werden, sobald eine Kollisionsgefahr erkannt wurde. Sofern es zur Kollisionsvermeidung notwendig ist, wird außerdem ein begrenzter Eingriff in das Fahrzeuglenksystem über die Lenkeingriffsmittel 17 und/oder ein Eingriff in das Fahrzeugbremssystem über die Bremseneingriffsmittel 18 durchgeführt.

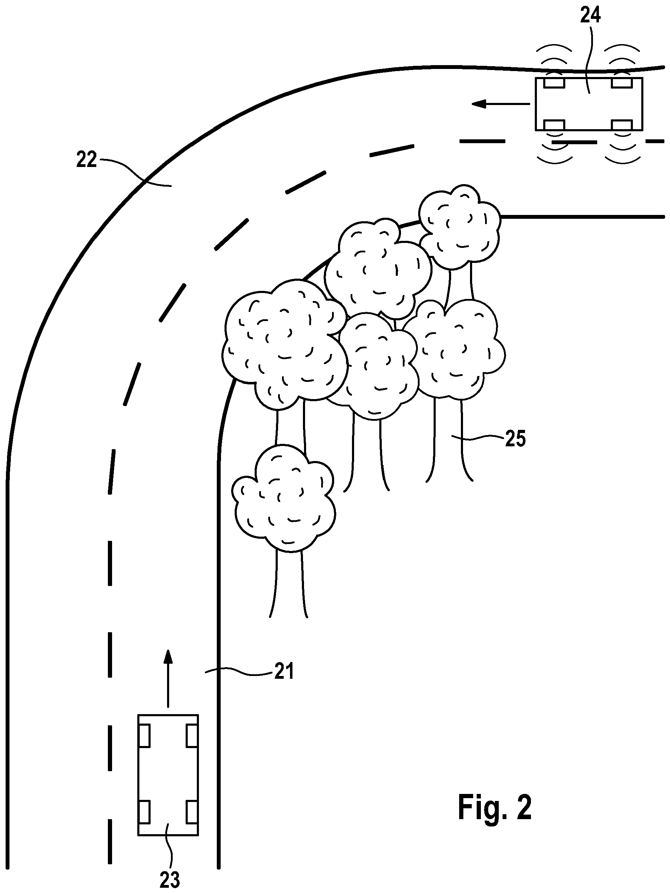

In Fig. 2 ist beispielhaft eine Verkehrssituation dargestellt, in der das erfindungsgemäße Verfahren zum Einsatz kommt. Zu sehen ist Straße 21, die um Kurve 22 führt. Fahrzeuge 23 und 24 nähern sich aus entgegengesetzten Richtungen Kurve 22. Die jeweiligen Fahrtrichtungen der beiden Fahrzeuge sind durch einen Pfeil in Bewegungsrichtung dargestellt. Wegen am Straßenrand wachsender Baumbestände 25 können die Fahrer der Fahrzeuge 23 und 24 das jeweils andere Fahrzeug nicht wahrnehmen. Fahrzeug 24 ist mit der erfindungsgemäßen Abstandskontrolleinrichtung ausgestattet, die in diesem Ausführungsbeispiel unter anderem seitlich an Fahrzeug 24 angeordnete Ultraschallsensoren als Nahbereichssensoren verwendet. Obwohl Fahrzeug 23 nicht über die erfindungsgemäße Abstandskontrolleinrichtung verfügt, besitzt es trotzdem ein zur Fahrzeug-zu-Fahrzeug-Kommunikation geeignetes Kommunikationsmodul, über das es eine ISM-Funkverbindung zu Fahrzeug 24 herstellen kann. Mittels dieser Funkverbindung sendet Fahrzeug 23 unter anderem seine GPS-Koordinaten, seine aktuelle Geschwindigkeit, seine Beschleunigung und seine Fahrtrichtung. Diese Daten werden von Fahrzeug 24 empfangen und von der Abstandskontrolleinrichtung in Fahrzeug 24 verarbeitet. Durch einen Abgleich der empfangenen Koordinaten und mithilfe von digitalem Kartenmaterial erkennt die Abstandskontrolleinrichtung, dass sich Fahrzeug 23 auf der selben Straße wie Fahrzeug 24 befindet. Anhand der übertragenen Fahrtrichtung von Fahrzeug 23 erkennt die Abstandskontrolleinrichtung außerdem, dass Fahrzeug 23 Fahrzeug 24 entgegenkommt. Aus dem digitalen Kartenmaterial und unter Berücksichtigung der eigenen Fahrzeugposition und Fahrzeuggeschwindigkeit ermittelt die Abstandskontrolleinrichtung weiterhin, dass beide Fahrzeuge zeitgleich Kurve 22 durchfahren werden. Die digitalen Kartendaten besagen des Weiteren, dass die Fahrbahnbreite in Kurve 22 beschränkt ist. Die Abstandskontrolleinrichtung in Fahrzeug 24 erkennt außerdem, dass die aktuelle Geschwindigkeit von Fahrzeug 23 zu hoch für die beschränkte Fahrbahnbreite in Kurve 22 ist und zudem aufgrund des Kurvenradius eine Querbeschleunigung von mehr als 0,3 g zu erwarten ist. Da die von Fahrzeug 23 gesendeten Beschleunigungsdaten keinen Bremsvorgang erkennen lassen, gibt die Abstandskontrolleinrichtung eine Warnung an den Fahrer von Fahrzeug 24 aus. Der Fahrer reduziert daraufhin die Geschwindigkeit des eigenen Fahrzeugs, um die Kollisionsgefahr zu verringern und das eigene Fahrzeug besser kontrollieren zu können. Zudem wird er aufgrund der Warnung beim Durchfahren der Kurve Fahrzeug 24 besondere Aufmerksamkeit widmen.

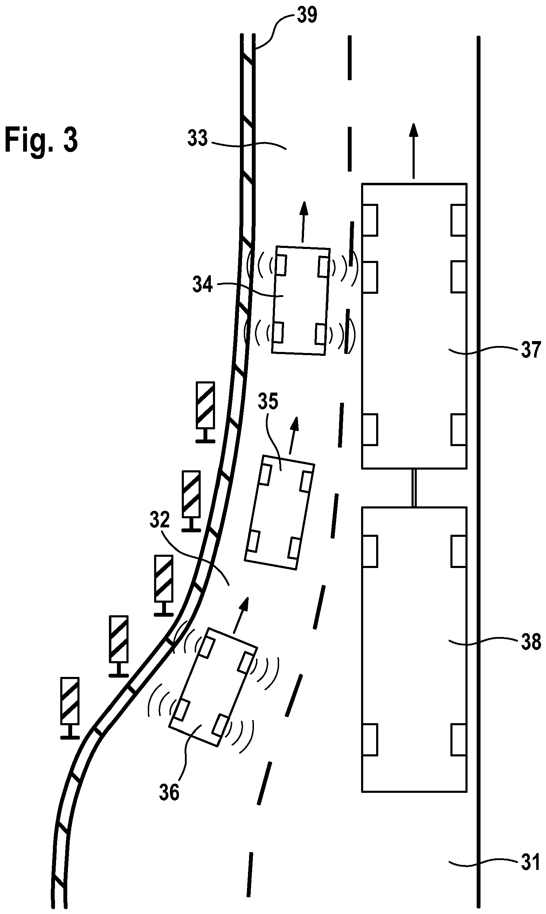

Fig. 3 zeigt Straße 31, die nach Verengung 32 in Baustellenbereich 33 übergeht. Die Fahrbahn wird auf der linken Seite durch Fahrbahnbegrenzung 39 begrenzt. Auf der rechten Spur von Fahrbahn 31 befindet sich in diesem Ausführungsbeispiel LKW 37 mit Anhänger 38. Die Bewegungsrichtung aller abgebildeten Fahrzeuge wird durch Pfeile dargestellt. Aufgrund der Dimensionierung und insbesondere der Breite von LKW 37, wird die Fahrbahnbreit von Fahrbahn 31 in Baustellenbereich 33 auf Höhe von LKW 37 stark eingeschränkt. Dadurch entsteht für überholenden PKW 34 eine Situation, welche ein erhöhtes seitliches Kollisionsrisiko beinhaltet. Da PKW 34 in diesem Ausführungsbeispiel mit der erfindungsgemäßen Abstandskontrolleinrichtung ausgerüstet ist, welche über seitlich am Fahrzeug angeordnete Nahbereichsradarsensoren verfügt, führt die Abstandskontrolleinrichtung einen Eingriff in das Fahrzeugbremssysteme an den Fahrzeugrädern durch, um den seitlichen Abstand sowohl zu LKW 37 als auch zur linken Fahrbahnbegrenzung 39 konstant zu halten. Da der Eingriff in das Fahrzeugbremssysteme nur geringfügig ist und nur zu einer relativ schwachen Fahrzeugverzögerung führt, wird durch den Eingriff kein Auffahrrisiko für den dicht folgenden PKW 35 geschaffen. Zudem hat der Fahrer von Fahrzeug 34 zu jedem Zeitpunkt das Gefühl, die volle Kontrolle über sein Fahrzeug zu besitzen, da die Fahrtrichtungsänderung ohne einen für den Fahrer wahrnehmbaren Eingriff in die Fahrzeuglenkung erfolgt.

Ebenfalls in Fig. 3 dargestelltes Fahrzeug 36 befindet sich in Verengung 32 und fährt in Baustellenbereich 33 ein. Da der Fahrer von Fahrzeug 36 bis kurz vor Erreichen von Verengung 32 darauf verzichtet hat, einen Verzögerungsvorgang einzuleiten, nähert sich Fahrzeug 36 mit hoher Geschwindigkeit Fahrzeug 35 an. Der Fahrer von Fahrzeug 36 ist daher gezwungen, maximal zu verzögern und gleichzeitig Fahrzeug 36 durch die Verengung zu steuern. Durch die starke Verzögerung und die gleichzeitige Lenkbewegung wird Fahrzeug 36 instabil und das ESP-System greift ein, um Fahrzeug 36 wieder zu stabilisieren. Beispielsgemäß verfügt Fahrzeug 36 außerdem über eine erfindungsgemäße Abstandskontrolleinrichtung, welche mittels seitlich am Fahrzeug angeordneter Ultraschallsensoren den seitlichen Abstand zu möglichen Kollisionshindernissen erfasst. Da der Fahrer von Fahrzeug 36 mit der vorliegenden Situation überfordert ist, nähert sich Fahrzeug 36 während des ESP-Regelvorgangs stark an Fahrbahnbegrenzung 39 an, was von der Abstandskontrolleinrichtung registriert wird. Um eine seitliche Kollision zu vermeiden, überlagert die Abstandskontrolleinrichtung dem ESP-Regelvorgang einen Eingriff in das Fahrzeugbremssystem zur Fahrtrichtungsänderung. Da der Eingriff in das Fahrzeugbremssystem zur Fahrtrichtungsänderung alleine keine zur Kollisionsvermeidung ausreichend große Fahrtrichtungsänderung bewirkt, stellt die Abstandskontrolleinrichtung weiterhin einen sich verringernden Seitenabstand zu Fahrbahnbegrenzung 39 fest. Um die bevorstehende Kollision noch zu vermeiden, führt die Abstandskontrolleinrichtung zusätzlich zum Eingriff in das Fahrzeugbremssystem einen Eingriff in das Fahrzeuglenksystem durch. Der Eingriff in das Fahrzeuglenksystem ist dabei auf einen maximalen Lenkänderungswinkel begrenzt, um Fahrzeug 36, das sich ohnehin in einem ESP-Regelvorgang befindet, nicht weiter zu destabilisieren. Durch den kombinierten Eingriff in das Fahrzeuglenks- und in das Fahrzeugbremssystem kann eine seitliche Kollision mit Fahrbahnbegrenzung 39 vermieden werden.

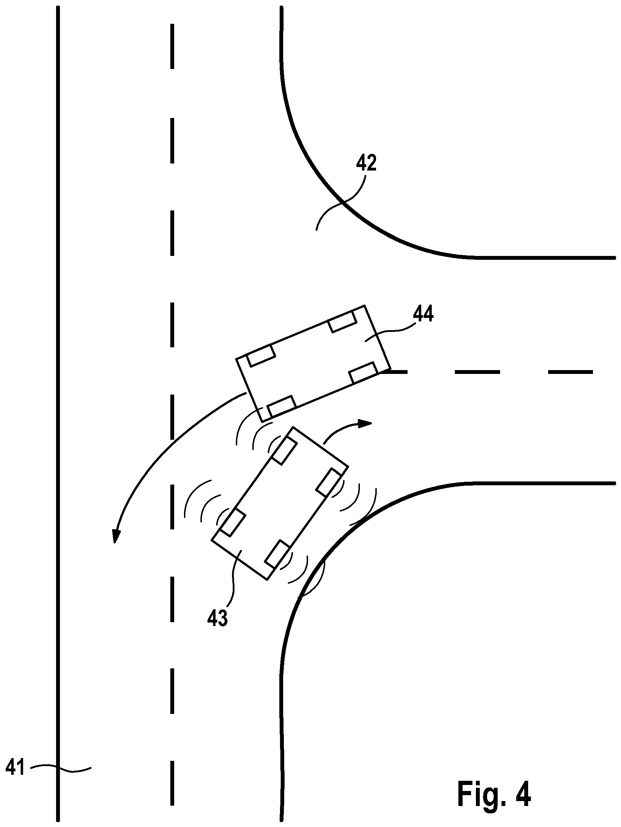

Das Ausführungsbeispiel in Fig. 4 zeigt Straße 41 mit Abbiegung 42. Auf Straße 41 befinden sich Fahrzeug 43 und Fahrzeug 44. Fahrzeug 43 führt an Abbiegung 42 einen Rechtsabbiegevorgang aus (dargestellt durch den Pfeil an Fahrzeug 43), während Fahrzeug 44 zeitgleich einen Linksabbiegevorgang an Abbiegung 42 ausführt. Da Fahrzeug 44 den Abbiegevorgang zu früh beginnt, gelangt es während des Abbiegens auf die Fahrbahnseite von Fahrzeug 43. Beide Fahrzeuge verfügen über Fahrzeug-zu-Fahrzeug-Kommunikationsmittel auf Basis von WLAN. Mittels der Fahrzeug-zu-Fahrzeug-Kommunikationsmittel erfährt die in Fahrzeug 43 angeordnete Abstandskontrolleinrichtung den Lenkradwinkel und die Geschwindigkeit von Fahrzeug 44. Über die in Fahrzeug 43 ebenfalls vorhandene Stereokamera, welche zur Abstandmessung geeignet ist, bestimmt die Abstandskontrolleinrichtung in Fahrzeug 43 die relative Position von Fahrzeug 44 zu Fahrzeug 43. Aus den Lenkradwinkeldaten und der Geschwindigkeit von Fahrzeug 44 kann die Abstandskontrolleinrichtung die Fahrtrajektorie von Fahrzeug 44 vorausberechnen. Ausgehend von der Relativposition der beiden Fahrzeuge und der eigenen Geschwindigkeit sowie des eigenen Lenkradwinkels erkennt die Abstandskontrolleinrichtung, dass es zu einer seitlichen Kollision kommen wird, wenn nicht eines der beiden Fahrzeuge seine Fahrtrajektorie verändert. Daher wird eine akustische Warnung an den Fahrer von Fahrzeug 43 ausgegeben, um ihn auf die vorliegende Gefährdung aufmerksam zu machen. Gleichzeitig wird dem Fahrzeuglenkrad ein zusätzliches Kraftmoment überlagert, um dem Fahrer eine Empfehlung zur Korrektur der Fahrtrajektorie zur Kollisionsvermeidung zu geben. Da der Fahrer jedoch auf die Warnung nicht reagiert und der Empfehlung zur Lenkradwinkeländerung nicht nachkommt, nähern sich beide Fahrzeuge auf ihren ursprünglichen Fahrtrajektorien weiter an. Sobald ein bestimmter seitlicher Abstand der beiden Fahrzeuge zueinander unterschritten wird, gelangt Fahrzeug 44 in Sensorreichweite der Ultraschallsensoren von Fahrzeug 43. Da die Abstandskontrolleinrichtung auch die Signale der Ultraschallsensoren auswertet, kann sie die vorausberechnete Kollisionsgefahr auf diesem Weg verifizieren. Um die bevorstehende Kollision doch noch zu vermeiden, führt die Abstandskontrolleinrichtung einen Bremseneingriff an den rechten Fahrzeugrädern von Fahrzeug 43 durch. Dadurch verringert sich der gefahrene Kurvenradius von Fahrzeug 43 und die Kollision kann vermieden werden.

## Patentansprüche

1. Verfahren zur Vermeidung von Kollisionen eines Fahrzeugs (23, 24) in einer Fahrsituation mit geringem Seitenabstand zu einem Kollisionskörper, wobei ein Warnsignal ausgegeben wird und/oder ein Eingriff in das Fahrzeugbremssystem und/oder das Fahrzeuglenksystem durchgeführt wird, wenn ein geschwindigkeitsabhängiger Mindestabstand des Fahrzeugs (23, 24) zu einem Kollisionskörper unterschritten wird und wobei der Eingriff in das Fahrzeugbremssystem derart durchgeführt wird, dass sich die Fahrtrichtung des Fahrzeugs (23,24) kontrolliert verändert, wobei die Kollisionskörper mittels seitlich am Fahrzeug (23, 24) angeordneter Nahbereichssensoren (13) detektiert werden, und wobei Fahrparameter und/oder von einer Fahrzeugsensorik gemessene Parameter an/von andere/n Fahrzeugskommunikationsmodule/n (14) mittels einem Fahrzeugkommunikationsmodel (14) gesendet und empfangen werden, wobei
das Fahrzeugkommunikationsmodul (14) auf Basis mindestens einer der folgenden Verbindungen mit mindestens einem anderen Fahrzeugkommunikationsmodul (14), seine Positionsdaten, seine aktuelle Geschwindigkeit, seine Beschleunigung und seine Fahrtrichtung kommuniziert:
- WLAN-Verbindung (141),
- ISM-Verbindung (Industrial, Scientific, Medical Band) (142),
- Infrarotverbindung (143) und
Mobilfunkverbindung (144).

2. Verfahren nach Anspruch 1,
**dadurch gekennzeichnet,**
**dass** bei dem Eingriff in das Fahrzeugbremssystem zur Änderung der Fahrtrichtung die linken oder rechten Räder paarweise gebremst werden.

3. Verfahren nach mindestens einem der Ansprüche 1 oder 2,
**dadurch gekennzeichnet,**
**dass** bei dem Eingriff in das Fahrzeugbremssystem zur Änderung der Fahrtrichtung ein einzelnes Rad gebremst wird.

4. Verfahren nach mindestens einem der Ansprüche 1 bis 3,
**dadurch gekennzeichnet,**
**dass** der Eingriff in das Fahrzeugbremssystem zur Änderung der Fahrtrichtung einem ABS-Regelvorgang überlagert wird.

5. Verfahren nach mindestens einem der Ansprüche 1 bis 4,
**dadurch gekennzeichnet,**
**dass** der Eingriff in das Fahrzeugbremssystem zur Änderung der Fahrtrichtung einem ESP-Regelvorgang überlagert wird.

6. Verfahren nach mindestens einem der Ansprüche 1 oder 5,
**dadurch gekennzeichnet,**
**dass** der zusätzlich oder alternativ zum Eingriff in das Fahrzeugbremssystem durchgeführte Eingriff in das Fahrzeuglenksystem auf einen vorgegebenen, maximalen Lenkänderungswinkel begrenzt ist.

7. Verfahren nach mindestens einem der Ansprüche 1 bis 6,
**dadurch gekennzeichnet,**
**dass** der Eingriff in das Fahrzeuglenksystem eine Empfehlung zur Änderung des aktuellen Kurvenradius an den Fahrer ist, indem dem Fahrzeuglenkrad ein zusätzliches Kraftmoment überlagert wird.

8. Verfahren nach mindestens einem der Ansprüche 1 bis 7,
**dadurch gekennzeichnet,**
**dass** die Warnung akustisch und/oder optisch und/oder haptisch ist.

9. Verfahren nach mindestens einem der Ansprüche 1 bis 8,
**dadurch gekennzeichnet,**
**dass** die Fahrbahnbreite in einer zu durchfahrenden Kurve (22) oder Engstelle vor dem Durchfahren der Kurve (22) oder Engstelle mittels Umfeldsensorik (15) und/oder Kartendaten und/oder des Fahrzeugkommunikationsmoduls erfasst wird.

10. Verfahren nach Anspruch 9,
**dadurch gekennzeichnet,**
**dass** die zur Fahrbahnbreitenbestimmung verwendete Umfeldsensorik (15) ein kameragestütztes Spurerkennungssystem ist.

11. Verfahren nach mindestens einem der Ansprüche 1 bis 10,
**dadurch gekennzeichnet,**
**dass** an den Fahrer eines ersten Fahrzeugs eine Warnung ausgegeben wird, wenn sich ein zweites, entgegenkommendes oder überholendes Fahrzeug mit überhöhter Geschwindigkeit einer vom ersten Fahrzeug zeitgleich mit dem zweiten Fahrzeug zu durchfahrenden Kurve (22) oder Engstelle nähert.

12. Verfahren nach mindestens einem der Ansprüche 1 bis 11,
**dadurch gekennzeichnet,**
**dass** nur dann eine Warnung ausgegeben wird, wenn bei der aktuellen Fahrzeuggeschwindigkeit in der Kurve (22) eine Querbeschleunigung zu erwarten ist, die 0,3 g übersteigt.

13. Verfahren nach mindestens einem der Ansprüche 1 bis 12,
**dadurch gekennzeichnet,**
**dass** nur dann eine Warnung ausgegeben wird, wenn die Fahrbahnbreite einen geschwindigkeitsabhängigen Mindestwert unterschreitet.

14. Verfahren nach mindestens einem der Ansprüche 1 bis 13,
**dadurch gekennzeichnet,**
**dass** mittels des Fahrzeugkommunikationsmoduls (14) mindestens einer der folgenden, von der eigenen Fahrzeugsensorik gemessenen Parameter an mindestens ein Fahrzeugkommunikationsmodul (14) mindestens eines anderen Fahrzeugs (23, 24) übertragen wird:
- Fahrzeuggeschwindigkeit,
- Fahrzeugbeschleunigung,
- Lenkradwinkel,
- Lenkradwinkelgeschwindigkeit,
- Gierrate,
- Gierbeschleunigung,
- Querbeschleunigung,
- Fahrzeugposition,
- Raddrehzahlen,
- Fahrtrichtung und
- Fahrbahnbreite.

15. Verfahren nach mindestens einem der Ansprüche 1 bis 14,
**dadurch gekennzeichnet,**
**dass** die Fahrtrajektorie des eigenen Fahrzeugs (23, 24) über mindestens zwei der folgenden Fahrparameter vorausberechnet wird:
- Fahrzeuggeschwindigkeit,
- Fahrzeugbeschleunigung,
- Lenkradwinkel,
- Lenkradwinkelgeschwindigkeit,
- Gierrate,
- Gierbeschleunigung,
- Querbeschleunigung,
- Fahrzeugposition,
- Raddrehzahlen und
- Fahrtrichtung.

16. Verfahren nach mindestens einem der Ansprüche 1 bis 15,
**dadurch gekennzeichnet,**
**dass** die Fahrtrajektorie eines weiteren Fahrzeugs (23, 24) mittels der von den Umfeldsensoren (15) gemessenen Parameter und/oder mittels der über das Kommunikationsmodul (14) empfangenen Parameter vorausberechnet wird.

17. Verfahren nach mindestens einem der Ansprüche 1 bis 16,
**dadurch gekennzeichnet,**
**dass** eine dynamische Kurvenfahrt eines Fahrzeugs (23, 24) auf einer mehrspurigen Straße (21) eine Fahrsituation mit geringem Seitenabstand darstellt.

18. Verfahren nach mindestens einem der Ansprüche 1 bis 17,
**dadurch gekennzeichnet,**
**dass** das Durchqueren eines Baustellenbereichs eine Fahrsituation mit geringem Seitenabstand darstellt.

19. Verfahren nach mindestens einem der Ansprüche 1 bis 18,
**dadurch gekennzeichnet,**
**dass** zusätzlich Daten eines Fahrzeugkommunikationsmoduls (14) genutzt werden.

20. Abstandskontrolleinrichtung (11), welche im Seitenbereich eines Fahrzeugs (23, 24) angeordnete Nahbereichssensoren (13) zur Detektion von Kollisionskörpern umfasst, wobei die Einrichtung ein Warnsignal ausgibt und/oder einen Eingriff in das Fahrzeugbremssystem und/oder das Fahrzeuglenksystem durchführt, wenn ein geschwindigkeitsabhängiger Mindestabstand des Fahrzeugs (23, 24) zu einem Kollisionskörper unterschritten wird und wobei die Einrichtung den Eingriff in das Fahrzeugbremssystem derart durchführt, dass sich die Fahrtrichtung des Fahrzeugs (23, 24) verändert, wobei
die Einrichtung zusätzlich ein Fahrzeugkommunikationsmodul (14) zum Senden und Empfangen von Fahrparametern und/oder von einer Fahrzeugsensorik gemessenen Parametern an/von andere/n Fahrzeugskommunikationsmodule/n (14) umfasst, wobei das Fahrzeugkommunikationsmodul (14) auf Basis mindestens einer der folgenden Verbindungen mit mindestens einem anderen Fahrzeugkommunikationsmodul (14) seine Positionsdaten, seine aktuelle Geschwindigkeit, seine Beschleunigung und seine Fahrtrichtung kommuniziert:
- WLAN-Verbindung (141),
- ISM-Verbindung (Industrial, Scientific, Medical Band) (142),
- Infrarotverbindung (143) und
Mobilfunkverbindung (144), und wobei
die Einrichtung zur Durchführung eines Verfahrens nach mindestens einem der Ansprüche 1 bis 19 ausgebildet ist.

21. Einrichtung (11) nach mindestens einem der Ansprüche 20,
**dadurch gekennzeichnet,**
**dass** die Nahbereichssensoren (13) Nahbereichsradarsensoren (131) und/oder Ultraschallsensoren (132) sind.

22. Einrichtung (11) nach mindestens einem der Ansprüche 20 bis 21,
**dadurch gekennzeichnet,**
**dass** die Einrichtung (11) zusätzlich ein sattelitengestütztes Positionsbestimmungsmodul umfasst.

23. Einrichtung (11) nach mindestens einem der Ansprüche 20 bis 22,
**dadurch gekennzeichnet,**
- **dass** die Einrichtung (WLAN-Verbindung,
- ISM-Verbindung (Industrial, Scientific, Medical Band),
- Infrarotverbindung und
Mobilfunkverbindung) zusätzlich ein Navigationssystem mit digitalem Kartenmaterial umfasst.

## Claims

1. A method for preventing collisions of a vehicle (23, 24) in a driving situation with little lateral distance from a collision body, wherein a warning signal is output and/or an intervention into the vehicle braking system and/or the vehicle steering system is carried out if a speed-dependent minimum distance of the vehicle (23, 24) from a collision body is fallen short of, and wherein the intervention into the vehicle braking system is carried out such that the driving direction of the vehicle (23, 24) changes in a controlled manner, wherein the collision bodies are detected by means of short-range sensors (13) arranged laterally on the vehicle (23, 24), and wherein driving parameters and/or parameters measured by a vehicle sensor system are transmitted and received to/from other vehicle communication module(s) (14) by means of a vehicle communication module (14), wherein
the vehicle communication module (14) communicates its position data, its current speed, its acceleration and its driving direction on the basis of at least one of the following connections to at least one other vehicle communication module (14):
- Wi-fi connection (141),
- ISM connection (Industrial, Scientific, Medical Band) (142),
- infrared connection (143), and
- mobile radio connection (144).

2. The method according to Claim 1,
**characterized in that**
during the intervention into the vehicle braking system the left-hand or right-hand wheels are braked in pairs in order to change the driving direction.

3. The method according to at least one of Claims 1 or 2,
**characterized in that**
during the intervention into the vehicle braking system an individual wheel is braked in order to change the driving direction.

4. The method according to at least one of Claims 1 to 3,
**characterized in that**
the intervention into the vehicle braking system for changing the driving direction is superimposed on an ABS control process.

5. The method according to at least one of Claims 1 to 4,
**characterized in that**
the intervention into the vehicle braking system for changing the driving direction is superimposed on an ESP control process.

6. The method according to at least one of Claims 1 or 5,
**characterized in that**
the intervention into the vehicle steering system, which is carried out in addition or alternatively to the intervention into the vehicle braking system, is limited to a predefined, maximum steering change angle.

7. The method according to at least one of Claims 1 to 6,
**characterized in that**
the intervention into the vehicle steering system is a recommendation to change the current cornering radius to the driver by superimposing an additional moment of force on the vehicle steering wheel.

8. The method according to at least one of Claims 1 to 7,
**characterized in that**
the warning is acoustic and/or visual and/or haptic.

9. The method according to at least one of Claims 1 to 8,
**characterized in that**
the roadway width in a bend (22) or constriction to be driven through is captured, before the bend (22) or constriction is driven through, by means of a surroundings sensor system (15) and/or map data and/or the vehicle communication module.

10. The method according to Claim 9,
**characterized in that**
the surroundings sensor system (15) used for determining the roadway width is a camera-based lane detection system.

11. The method according to at least one of Claims 1 to 10,
**characterized in that**
a warning is output to the driver of a first vehicle if a second oncoming or overtaking vehicle is approaching, at excessive speed, a bend (22) or constriction to be driven through by the first vehicle at the same time as the second vehicle.

12. The method according to at least one of Claims 1 to 11,
**characterized in that**
a warning is only output if a transverse acceleration which exceeds 0.3 g is to be expected in the bend (22) given the current vehicle speed.

13. The method according to at least one of Claims 1 to 12,
**characterized in that**
a warning is only output if the roadway width falls short of a speed-dependent minimum value.

14. The method according to at least one of Claims 1 to 13,
**characterized in that**
at least one of the following parameters measured by the vehicle's own sensor system is transmitted by means of the vehicle communication module (14) to at least one vehicle communication module (14) of at least one other vehicle (23, 24) :
- vehicle speed,
- vehicle acceleration,
- steering wheel angle,
- steering wheel angle speed,
- yaw rate,
- yaw acceleration,
- transverse acceleration,
- vehicle position,
- wheel rotational speeds,
- driving direction, and
- roadway width.

15. The method according to at least one of Claims 1 to 14,
**characterized in that**
the driving trajectory of the ego vehicle (23, 24) is precalculated by means of at least two of the following driving parameters:
- vehicle speed,
- vehicle acceleration,
- steering wheel angle,
- steering wheel angle speed,
- yaw rate,
- yaw acceleration,
- transverse acceleration,
- vehicle position,
- wheel rotational speeds, and
- driving direction.

16. The method according to at least one of Claims 1 to 15,
**characterized in that**
the driving trajectory of a further vehicle (23, 24) is precalculated by means of the parameters measured by the surroundings sensors (15) and/or by means of the parameters received via the communication module (14).

17. The method according to at least one of Claims 1 to 16,
**characterized in that**
a dynamic cornering of a vehicle (23, 24) on a multi-lane road (21) constitutes a driving situation with little lateral distance.

18. The method according to at least one of Claims 1 to 17,
**characterized in that**
passing a road construction area constitutes a driving situation with little lateral distance.

19. The method according to at least one of Claims 1 to 18,
**characterized in that**
data of a vehicle communication module (14) are additionally used.

20. A distance control device (11) which comprises short-range sensors (13) for detecting collision bodies arranged in the side region of a vehicle (23, 24), wherein the device outputs a warning signal and/or carries out an intervention into the vehicle braking system and/or the vehicle steering system if a speed-dependent minimum distance of the vehicle (23, 24) from a collision body is fallen short of, and wherein the device carries out the intervention into the vehicle braking system such that the driving direction of the vehicle (23, 24) changes, wherein
the device additionally comprises a vehicle communication module (14) for transmitting and receiving driving parameters and/or parameters measured by a vehicle sensor system to/from other vehicle communication module(s) (14), wherein the vehicle communication module (14) communicates its position data, its current speed, its acceleration and its driving direction on the basis of at least one of the following connections to at least one other vehicle communication module (14):
- Wi-Fi connection (141),
- ISM connection (Industrial, Scientific, Medical Band) (142),
- infrared connection (143), and
- mobile radio connection (144), and wherein
the device for carrying out a method is designed according to at least one of Claims 1 to 19.

21. The device (11) according to at least one of Claims 20,
**characterized in that**
the short-range sensors (13) are short-range radar sensors (131) and/or ultrasonic sensors (132).

22. The device (11) according to at least one of Claims 20 to 21,
**characterized in that**
the device (11) additionally comprises a satellite-based position-determining module.

23. The device (11) according to at least one of Claims 20 to 22,
**characterized in that**
- the device (Wi-Fi connection),
- ISM connection (Industrial, Scientific, Medical Band),
- infrared connection, and
- mobile radio connection) additionally comprise a navigation system with digital map material.

## Revendications

1. Procédé pour l'évitement de l'entrée en collision d'un véhicule (23, 24) dans une situation de conduite à faible distance latérale d'un corps de collision, un signal d'avertissement étant émis et/ou une intervention sur le système de freinage du véhicule et/ou le système de direction du véhicule étant effectuée lorsque le seuil d'une distance minimum du véhicule (23, 24) à un corps de collision dépendant de la vitesse est dépassé, et l'intervention sur le système de freinage du véhicule étant effectuée de telle sorte que la direction de déplacement du véhicule (23, 24) est modifiée de façon contrôlée, les corps de collision étant détectés au moyen d'un système de capteurs de proximité (13) disposés latéralement sur le véhicule (23, 24), et les paramètres de conduite et/ou les paramètres mesurés par un système de capteurs de véhicule étant envoyés/reçus à d'autres modules/d'autres modules de communication de véhicule au moyen d'un module de communication de véhicule (14),
le module de communication de véhicule (14) communiquant ses données de position, sa vitesse actuelle, son accélération et sa direction de déplacement sur la base d'au moins une des connexions suivantes avec au moins un autre module de communication de véhicule (14) :
- connexion Wi-Fi (141),
- connexion ISM (bandes industrielle, scientifique, médicale) (142),
- connexion infrarouge (143) et
connexion par téléphonie mobile (144).

2. Procédé selon la revendication 1,
**caractérisé en ce que**,
lors de l'intervention sur le système de freinage de véhicule, les roues droites ou gauches sont freinées par paires pour la modification de la direction de déplacement.

3. Procédé selon au moins l'une des revendications 1 ou 2,
**caractérisé en ce que**,
lors de l'intervention sur le système de freinage de véhicule, une seule roue est freinée pour la modification de la direction de déplacement.

4. Procédé selon au moins l'une des revendications 1 à 3,
**caractérisé en ce que**
l'intervention sur le système de freinage de véhicule pour la modification de la direction de déplacement est superposée à un processus de réglage ABS.

5. Procédé selon au moins l'une des revendications 1 à 4,
**caractérisé en ce que**
l'intervention sur le système de freinage de véhicule pour la modification de la direction de déplacement est superposée à un processus de réglage ESP.

6. Procédé selon au moins l'une des revendications 1 ou 5,
**caractérisé en ce que**
l'intervention sur le système de direction de véhicule exécutée de façon supplémentaire ou alternativement à l'intervention sur le système de freinage de véhicule est limitée à un angle de modification de braquage maximum spécifié.

7. Procédé selon au moins l'une des revendications 1 à 6,
**caractérisé en ce que**
l'intervention sur le système de direction de véhicule est une recommandation au conducteur pour la modification du rayon de courbure actuel, par le fait qu'un couple supplémentaire est superposé au volant du véhicule.

8. Procédé selon au moins l'une des revendications 1 à 7,
**caractérisé en ce que**
l'avertissement est sonore et/ou visuel et/ou tactile.

9. Procédé selon au moins l'une des revendications 1 à 8,
**caractérisé en ce que**
la largeur de chaussée dans un virage (22) ou une zone étroite devant être passé(e) est détectée au moyen d'un système de capteurs d'environnement (15) et/ou de données cartographiques et/ou du module de communication de véhicule, avant le passage du virage (22) ou de la zone étroite.

10. Procédé selon la revendication 9,
**caractérisé en ce que**
le système de capteurs d'environnement (15) utilisé pour la détermination de la largeur de chaussée est un système de détection de voie basé sur caméra.

11. Procédé selon au moins l'une des revendications 1 à 10,
**caractérisé en ce qu'**
un avertissement est émis pour le conducteur d'un premier véhicule, lorsqu'un deuxième véhicule venant en sens inverse ou en train de dépasser s'approche à vitesse élevée d'un virage (22) ou d'une zone étroite devant être passé(e) par le premier véhicule simultanément au deuxième véhicule.

12. Procédé selon au moins l'une des revendications 1 à 11,
**caractérisé en ce qu'**
un avertissement est uniquement émis lorsqu'il est possible de s'attendre à une accélération transversale supérieure à 0,3 g dans le virage (22), avec la vitesse actuelle du véhicule.

13. Procédé selon au moins l'une des revendications 1 à 12,
**caractérisé en ce qu'**
un avertissement est uniquement émis lorsque la largeur de chaussée est inférieure à une valeur minimum dépendant de la vitesse.

14. Procédé selon au moins l'une des revendications 1 à 13,
**caractérisé en ce qu'**
au moins un des paramètres suivants mesurés par le système de capteurs propre au véhicule est transmis à au moins un module de communication de véhicule (14) d'au moins un autre véhicule (23, 24), à l'aide du module de communication de véhicule (14) :
- vitesse de véhicule,
- accélération de véhicule,
- angle de braquage,
- vitesse d'angle de braquage,
- vitesse de lacet,
- accélération de lacet,
- accélération transversale,
- position du véhicule,
- vitesse de rotation des roues,
- direction de déplacement et
- largeur de chaussée.

15. Procédé selon au moins l'une des revendications 1 à 14,
**caractérisé en ce que**
la trajectoire de déplacement du véhicule propre (23, 24) est calculée à l'avance à l'aide d'au moins deux des paramètres de conduite suivants :
- vitesse de véhicule,
- accélération de véhicule,
- angle de braquage,
- vitesse d'angle de braquage,
- vitesse de lacet,
- accélération de lacet,
- accélération transversale,
- position du véhicule
- vitesses de rotation des roues et
- direction de déplacement.

16. Procédé selon au moins l'une des revendications 1 à 15,
**caractérisé en ce que**
la trajectoire de déplacement d'un autre véhicule (23, 24) est calculée à l'avance au moyen des paramètres mesurés par les capteurs d'environnement (15) et/ou au moyen des paramètres reçus par le module de communication (14).

17. Procédé selon au moins l'une des revendications 1 à 16,
**caractérisé en ce qu'**
une conduite en virage dynamique d'un véhicule (23, 24) sur une route à plusieurs voies (21) représente une situation de conduite avec distance latérale faible.

18. Procédé selon au moins l'une des revendications 1 à 17,
**caractérisé en ce que**
le passage d'une zone de chantier représente une situation de conduite avec distance latérale faible.

19. Procédé selon au moins l'une des revendications 1 à 18,
**caractérisé en ce que**
des données d'un module de communication de véhicule (14) sont de plus utilisées.

20. Dispositif de contrôle de la distance (11), laquelle comprend des capteurs de proximité (13) disposés dans la zone latérale d'un véhicule (23, 24) pour la détection de corps de collision, le dispositif émettant un signal d'avertissement et/ou effectuant une intervention sur le système de freinage de véhicule et/ou sur le système de direction de véhicule lorsque le seuil d'une distance minimum entre le véhicule (23, 24) à un corps de collision dépendant de la vitesse est dépassé, et le dispositif exécutant l'intervention sur le système de freinage de véhicule de telle sorte que la direction de déplacement du véhicule (23, 24) est modifiée,
le dispositif comprenant en outre un module de communication de véhicule (14) pour l'émission et la réception de paramètres de conduite et/ou de paramètres mesurés par un système de capteurs de véhicule à d'autres/d'autres module de communication de véhicule (14), le module de communication de véhicule (14) communiquant ses données de position, sa vitesse actuelle, son accélération et sa direction de déplacement sur la base de l'au moins une des connexions suivantes avec au moins un autre module de communication de véhicule (14) :
- connexion Wi-Fi (141),
- connexion ISM (bandes industrielle, scientifique, médicale) (142),
- connexion infrarouge (143) et
connexion par téléphonie mobile (144), et
le dispositif étant formé pour l'exécution d'un procédé selon au moins l'une des revendications 1 à 19.

21. Dispositif (11) selon au moins l'une des revendications 20,
**caractérisée en ce que**
les capteurs de proximité (13) sont des capteurs radar de proximité (131) et/ou des capteurs à ultrasons (132).

22. Dispositif (11) selon au moins l'une des revendications 20 à 21,
**caractérisée en ce que**
le dispositif (11) comprend en outre un module de détermination de position assistée par satellite.

23. Dispositif (11) selon au moins l'une des revendications 20 à 22,
**caractérisée en ce que**
- le dispositif (connexion Wi-Fi,
- connexion ISM (bandes industrielle, scientifique, médicale),
- connexion infrarouge et
connexion par téléphonie mobile) comprend en outre un système de navigation avec matériel cartographique numérique.
